# FASCICULE DE BREVET EUROPEEN

(11) **EP 1 358 749 B1**
(45) Date de publication et mention de la délivrance du brevet: **17.10.2007**
(21) Numéro de dépôt: 02701366.3
(22) Date de dépôt: 31.01.2002
(51) Int. Cl.: H04L 29/06, H04M 3/493

(54) **PROCEDE DE SONORISATION AU TRAVERS DU RESEAU TELEPHONIQUE D'UNE PAGE DE DONNEES CONSULTABLE A DISTANCE A TRAVERS UN RESEAU DE COMMUNICATION, SITE, SERVEUR VOCAL ET ORDINATEUR METTANT CE PROCEDE EN OEUVRE**
VERFAHREN ZUR BESCHALLUNG EINER DURCH EIN KOMMUNIKATIONSNETZ ABFRAGBAREN DATENSEITE DURCH EIN TELEFONNETZ
METHOD FOR ADDING SOUND VIA A TELEPHONE NETWORK TO A PAGE OF DATA THAT CAN BE REMOTELY CONSULTED VIA A COMMUNICATION NETWORK, SITE, VOICE SERVER AND COMPUTER USING SAID METHOD

(30) Priorité: 31.01.2001 FR 0101336
(43) Date de publication de la demande: 05.11.2003
(73) Titulaire: Neocom Multimedia, 13005 Marseille (FR)
(72) Inventeur: CAIRE, Hubert, F-13006 Marseille (FR); SABDES, Julien, F-13220 Chateauneuf Les Martigues (FR)
(74) Mandataire: de la Bigne, Guillaume Michel Marie
(86) Numéro de dépôt international: PCT/FR2002/000378
(87) Numéro de publication internationale: WO 2002/062034

(56) Documents cités:
- WO-A-97/42728
- CA-A- 2 178 705

## Description

La présente invention concerne un procédé de sonorisation d'une page de données consultable à distance à travers un réseau de communication, un site, un serveur vocal et un ordinateur mettant en oeuvre ce procédé.

On connaît les pages de données consultables sur le réseau Internet, qui sont couramment désignées sites. Ces pages de données contiennent du texte, des images, animées ou fixes, et, quelquefois, des sons.

L'état de l'art est représenté par le document CA 2178 705.

Le développement de sites diffusant du son en temps réel est aujourd'hui limité par le faible débit de la majeure partie des connexions au réseau Internet. Des algorithmes de compactage comme ceux de la famille MPEG permettent d'accroître le rendement des lignes par des moyens logiciels, mais dans des proportions généralement insuffisantes et au prix de calculs qui mobilisent les ressources de l'ordinateur, lequel doit donc être relativement puissant. En outre, des modules externes, désignés plugins, doivent souvent être téléchargés pour exécuter ces algorithmes.

Face à ce problème, un certain nombre d'éditeurs désireux de sonoriser leur site en dépit des limitations de débit se résignent à utiliser des sons de qualité médiocre, compatible avec des débits relativement bas.

La présente invention vise à proposer une solution de sonorisation d'un site qui permet la diffusion de sons de bonne qualité sans aucune surcharge du réseau d'accès au site.

La présente invention a pour objet un procédé de sonorisation d'une page de données consultable à distance à travers un réseau de communication, caractérisé en ce qu'il consiste à établir une communication téléphonique avec un visiteur de la page et à transmettre audit visiteur, via la communication téléphonique, des sons dont l'émission est déclenchée par la navigation du visiteur sur la page de données.

Ce procédé est intéressant en ce qu'il ne mobilise aucune ressource de l'ordinateur utilisé pour naviguer sur la page de données et, surtout, en ce qu'il n'encombre pas la ligne d'accès au réseau de communication, qui ne transfère que des textes ou des images.

Ainsi, quelle que soit sa connexion au réseau de communication, tout visiteur de la page de données peut recevoir, sur son téléphone, les sons associés aux évènements qui se déclenchent sur la page de données en cours de navigation.

Dans un mode de mise en oeuvre particulier de l'invention, la communication téléphonique établie avec le visiteur de la page de données sert non seulement à transmettre des sons à destination du visiteur, mais également à capturer des sons émis par lui.

En particulier, le téléphone peut être utilisé par l'éditeur du site comme microphone pour enregistrer les sons qui devront être diffusés aux visiteurs. L'éditeur peut ainsi paramétrer son site à distance en modifiant les sons associés aux différentes zones des pages de son site.

Dans un mode de mise en oeuvre particulier de l'invention, les sons émis par un premier visiteur sur une première communication téléphonique sont redirigés vers une deuxième communication téléphonique établie par un deuxième visiteur, et les sons émis par le deuxième visiteur sur la deuxième communication téléphonique sont redirigés vers la première communication téléphonique. En d'autres termes, les deux visiteurs sont mis en relation téléphonique par le serveur.

Grâce à cette possibilité, le procédé selon l'invention peut être utilisé dans un grand nombre d'applications de serveurs Internet. Il peut s'agir par exemple d'un site d'orientation téléphonique : la visiteur se connecte au site d'accueil téléphonique d'une entreprise ou d'une administration et cherche à joindre un interlocuteur ou un service en particulier. En naviguant sur le site, le visiteur déroule des menus correspondants aux différents départements de l'entreprise et aboutit à une indication de l'interlocuteur qu'il cherchait. Au fil de sa navigation, le visiteur est guidé non seulement par les informations visuelles qui s'affichent à l'écran mais également par des informations sonores synchrones reçues par téléphone. Une fois l'interlocuteur trouvé, le visiteur peut être mis en communication téléphonique avec lui en cliquant sur un lien, ce qui déclenche le transfert de la communication téléphonique sur le poste téléphonique de l'interlocuteur.

Une autre application concernée par l'invention est celle des mises en relation de visiteurs : Différents visiteurs qui ne se connaissent pas à priori se connectent a un site afin d'entrer en relation. Chacun formule le problème qu'il souhaite résoudre en comptant sur la présence simultanée sur le site d'un autre visiteur susceptible de lui apporter une solution. Tout visiteur peut consulter la liste des visiteurs connectés et les problèmes qu'ils soumettent. Celui s'estimant en mesure d'aider un autre visiteur peut entrer directement en communication téléphonique avec lui par l'intermédiaire du site, en cliquant sur le lien correspondant. Grâce au procédé selon l'invention, aucun visiteur n'est tenu d'indiquer son propre numéro de téléphone.

L'invention porte sur les sites offrant ces possibilités.

Dans un mode de mise en oeuvre particulier de l'invention, l'établissement, par le visiteur, d'une communication téléphonique vers un numéro précis conditionne son accès à la page de données. En choisissant un numéro à tarification spéciale, l'invention permet de rémunérer le producteur de la page de données, en bénéficiant de la tarification partagée des appels téléphoniques (partage des revenus entre l'opérateur téléphonique et le prestataire de services). On peut ainsi faire payer l'accès à un site sans recourir aux méthodes traditionnelles de télépaiement par carte bancaire ou par prélèvement sur un compte bancaire, tout en fournissant un service payant disponible sans abonnement préalable.

L'invention a également pour objet un site accessible par un réseau de communication, caractérisé en ce qu'il comprend au moins une page incluant un son devant être émis à travers une communication téléphonique.

Dans un mode de réalisation particulier, le site comprend une page d'identification invitant un visiteur du site à composer un numéro de téléphone sur une ligne téléphonique pour établir ladite communication téléphonique.

L'invention a encore pour objet un serveur vocal apte à être relié, d'une part, au réseau téléphonique commuté, d'autre part à un réseau public de communication, qui est caractérisé en ce qu'il comprend des moyens pour recevoir une requête via le réseau public de communication en provenance d'un autre serveur hébergeant une page de données, des moyens pour établir une communication téléphonique avec un visiteur de la page de données, et des moyens pour répondre à ladite requête en émettant des sons déterminés par ladite requête à travers ladite communication téléphonique.

L'invention a enfin pour objet un ordinateur hébergeant un serveur vocal tel que décrit ci-dessus.

L'invention sera mieux comprise à la lecture de la description qui va suivre, donnée uniquement à titre d'exemple et faite en se référant aux dessins annexés dans lesquels :
- la figure 1 représente une page d'accueil d'un site selon l'invention ;
- la figure 2 représente une page ultérieure du site de la figure 1 et le combiné téléphonique d'un visiteur;
- la figure 3 est un schéma représentant deux serveurs, l'ordinateur personnel et le téléphone d'un visiteur, un réseau de communication et le réseau téléphonique commuté ;
- la figure 4 est un schéma représentant deux serveurs, l'ordinateur personnel et le téléphone de deux visiteurs, le réseau de communication et le réseau téléphonique commuté.

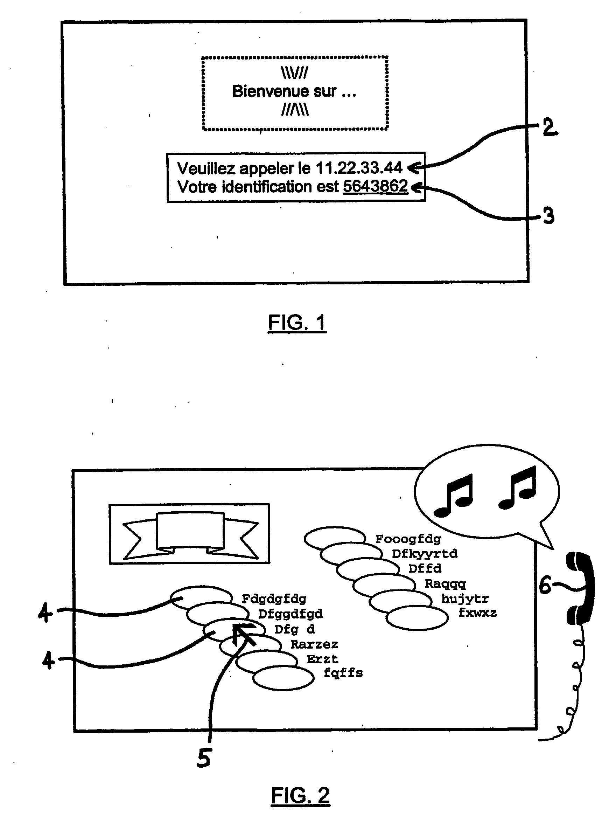

On a représenté, sur la figure 1, une page d'accueil 1 d'un site sur laquelle un visiteur est invité à composer un numéro de téléphone 2 pour compléter sa connexion au site par une liaison téléphonique. Le visiteur se voit indiquer le numéro de téléphone à composer ainsi qu'un numéro d'identification 3 qui lui est propre et qui lui a été affecté par le serveur au moment de sa connexion au site.

Le numéro d'identification 3 est utilisé pour associer la communication téléphonique (via le réseau téléphonique commuté) à établir entre le visiteur et le serveur du site à la connexion établie (via un réseau public de communication tel qu'Internet) entre l'ordinateur et le serveur du site.

Une autre méthode d'identification du visiteur consiste à lui faire connaître son numéro d'identification par téléphone et à l'inviter à saisir ce numéro dans un formulaire sur la page d'accueil du site. Comme décrit précédemment, la communication téléphonique et la liaison établie entre l'ordinateur du visiteur et le serveur du site sont associées grâce à ce numéro d'identification.

La figure 2 est un exemple d'une page du site comprenant des zones actives 4. Lorsque l'utilisateur déplace le pointeur 5 de sa souris dessus et clique, il déclenche l'émission de sons qui fournissent des commentaires sur les images superposées aux zones actives.

Tous les sons parviennent au visiteur par l'intermédiaire de la communication téléphonique et aboutissent à son combiné 6 ; ils ne sont pas envoyés par le réseau de communication pour exécution sur l'ordinateur du visiteur.

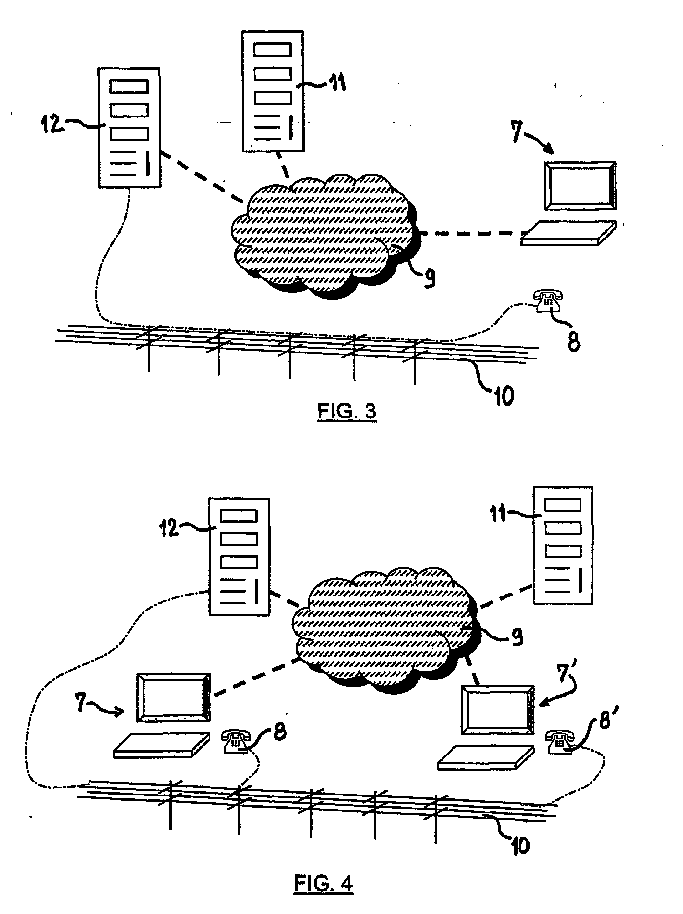

A la figure 3, on a représenté l'ensemble d'un système permettant à un visiteur de naviguer sur un site mettant en oeuvre l'invention.

Le visiteur dispose de son ordinateur personnel 7 et de son propre téléphone 8. L'ordinateur personnel 7 du visiteur est relié au réseau public de communication 9, lequel sera désigné par la suite « Réseau Internet » et le téléphone est relié au réseau téléphonique commuté 10.

Un premier ordinateur qui constitue un serveur Internet 11 héberge le site que le visiteur souhaite explorer. Ce serveur Internet peut appartenir à l'éditeur du site ou à un hébergeur. En tout état de cause, le contenu du site est administré par un Webmestre (Webmaster) agissant pour le compte de l'éditeur du site.

Un second ordinateur 12 assure la mise en oeuvre de l'invention en jouant le rôle, d'une part, de serveur vocal (il est à cet effet relié au réseau téléphonique commuté), d'autre part, de serveur Internet contrôlant les accès au site (il est à cet effet relié au réseau Internet pour communiquer avec le premier serveur).

On va maintenant décrire la séquence d'opérations qui se déroule lorsqu'un visiteur accède à un site hébergé sur le premier serveur et le visite.

Le visiteur indique, sur le programme de navigation qui s'exécute sur son ordinateur personnel 7, l'adresse de la page d'accueil du site, laquelle se situe dans la partie publique de celui-ci.

Cette page d'accueil contient l'indication d'un numéro de téléphone à composer pour se connecter au site.

Suivant que le numéro d'identification (qui peut également être désigné « mot de passe ») est fourni par affichage sur l'ordinateur personnel 7 du visiteur ou par un message vocal sur son téléphone 8, on distingue deux mécanismes d'authentification.

Si l'identification est fournie par affichage à l'écran de l'ordinateur personnel 7 du visiteur, les étapes suivantes sont exécutées:
- Lors de la connexion de l'ordinateur personnel du visiteur à la page d'accueil du site, le premier serveur 11 notifie le second serveur 12 du fait qu'un nouvel utilisateur est candidat à une visite du site.
- Le second ordinateur 12, en tant que serveur Internet contrôlant les accès au site, crée un nouveau compte pour cet utilisateur, éventuel visiteur du site et lui attribue un numéro d'identification, numéro qu'il envoie au premier serveur par une liaison point à point via le réseau Internet.
- Le premier serveur 11 redirige l'utilisateur vers une page située dans la partie privée du site, indiquant le numéro de téléphone à composer et le numéro d'identification attribué par le second serveur. Un exemple d'une telle page est fournie par la figure 1.
- Le visiteur compose, sur le clavier de son téléphone 8, le numéro indiqué par le site et entre ainsi en communication téléphonique avec le serveur vocal du second ordinateur. A l'invitation du serveur vocal, le visiteur compose, sur le clavier de son téléphone 8, le numéro d'identification affiché sur l'écran de son ordinateur.
- Le second ordinateur 12 compare le numéro ainsi composé avec le numéro d'identification qu'il avait attribué à ce visiteur et adresse au premier serveur, par une liaison point à point via le réseau Internet, une autorisation d'accès au site.
- Le visiteur peut commencer sa navigation comme indiqué par la suite.

Si l'identification est fournie à l'utilisateur par téléphone, les étapes sont les suivantes :
- La page d'accueil du site indique, en plus du numéro de téléphone à composer pour se connecter au site, un formulaire qui permet à l'utilisateur de saisir un log-in (ou, en français, un identifiant) et un mot de passe.
- L'utilisateur compose le numéro de téléphone et entre en communication téléphonique avec le serveur vocal du second serveur.
- Le serveur vocal du second serveur fournit au visiteur un log-in qui lui est attribué dynamiquement et le visiteur remplit le formulaire sur l'écran de son ordinateur en indiquant le log-in qui vient de lui être indiqué et un mot de passe choisi par lui.
- Le visiteur renvoie le formulaire ainsi rempli au premier serveur.
- Via une liaison point à point sur le réseau Internet, le premier serveur 11 adresse une requête au second serveur 12 en indiquant le log-in et le mot de passe saisis par le visiteur.
- Le second serveur 12 retourne au premier serveur, par une liaison point à point, une autorisation d'accès au site, après vérification que le log-in est bien celui qui a été indiqué par téléphone au visiteur.

Une fois l'autorisation accordée, quel que soit le mode de contrôle d'accès, le visiteur pénètre dans la partie privée du site et navigue sur ses pages. Au cours de la navigation, les actions du visiteur peuvent déclencher des émissions de sons. Les sons parviennent au visiteur par l'intermédiaire de la ligne téléphonique de la manière suivante.

Dans la page du site, aux emplacements correspondants aux contrôles audio, on a programmé des appels à un script disponible sur le second serveur 12. Ce script accepte, en paramètres, le log-in du visiteur et une liste de commandes avec leurs propres paramètres. Chaque appel déclenche l'exécution du script sur le second serveur et cette exécution du script se traduit par l'émission, de la part du serveur vocal, de sons à travers la communication téléphonique établie avec le téléphone 8 du visiteur.

Si le second serveur n'est dédié qu'à un seul site, l'identification du log-in du visiteur suffit à gérer les accès et les sonorisations du site, comme cela vient d'être indiqué.

En revanche, si le second serveur est utilisé par différents sites, éventuellement hébergés par des premiers serveurs différents, ce qui est le cas général, une clé d'authentification est nécessaire pour identifier le site concerné. Dans cette hypothèse, le second serveur 12 gère une base de donnés qui référence tous les sites dont l'accès et la sonorisation sont gérés par ledit second serveur.

La clé d'authentification est ainsi utilisée, en plus du log-in, au moment du contrôle d'accès des visiteurs aux sites ainsi qu'au moment des émissions audio pendant la navigation sur les sites.

Des exemples de commandes exécutables par le script de contrôle audio sur le second serveur sont :
- Commande « delay », qui agit comme un modifieur en spécifiant la durée maximale des prochains enregistrements en secondes,
- Commande « duo » qui établit une communication téléphonique entre le visiteur courant et une autre personne dont le log-in est passé en paramètre,
- Commande « erase » qui supprime le fichier dont le nom est donné en paramètre,
- Commande « play » qui joue le fichier son dont le nom est passé en paramètre selon une lecture synchrone, c'est-à-dire que la commande suivante n'est lue que lorsque la lecture du fichier est terminée,
- Commande « record » qui enregistre le fichier son dont le nom est passé en paramètre. La durée maximale d'enregistrement est spécifiée par la commande « delay »,

Commande « spell » qui épelle la chaîne passée en paramètre, cette chaîne étant composée uniquement de lettres et de chiffres.

On voit que le second serveur 12 intervient à deux titres dans la gestion du site. D'une part, le second serveur contrôle l'accès au site en fournissant un numéro d'identification (ou log-in) qui garantit que le visiteur a correctement établi une connexion téléphonique au moment de l'accès au site, d'autre part il émet les sons qui assurent la sonorisation du site et permettent de d'alléger le trafic sur la liaison transitant par le réseau Internet.

Dans l'exemple de la figure 4, on retrouve les deux ordinateur 11, 12 de la figure 3 et l'ordinateur personnel 7,7' ainsi que le téléphone personnel 8,8' de deux visiteurs. Chaque visiteur se connecte au site hébergé sur le premier serveur selon la procédure décrite ci-dessus.

La commande « duo », précédemment mentionnée, permet aux deux visiteurs d'entrer en communication téléphonique mutuelle par leurs téléphones 8, 8', via le serveur vocal, au cours de leur navigation sur le site.

Il est bien entendu que les modes de réalisation décrits ci-dessus, ne sont donnés qu'à titre limitatif et n'impliquent aucune limitation de la portée de l'invention.

## Revendications

1. Procédé de sonorisation d'une page de données consultable à distance à travers un réseau de communication (9), **caractérisé en ce qu'**il consiste à établir une communication téléphonique avec un visiteur de la page et à transmettre audit visiteur, via la communication téléphonique, des sons dont l'émission est déclenchée par la navigation du visiteur sur la page de données.

2. Procédé selon la revendication 1, **caractérisé en ce que** la communication téléphonique établie avec le visiteur de la page de données sert non seulement à transmettre des sons à destination du visiteur, mais également à capturer des sons émis par lui.

3. Procédé selon l'une quelconque des revendications 1 et 2, **caractérisé en ce que** les sons émis par un premier visiteur sur une première communication téléphonique sont redirigés vers une deuxième communication téléphonique établie par un deuxième visiteur, et **en ce que** les sons émis par le deuxième visiteur sur la deuxième communication téléphonique sont redirigés vers la première communication téléphonique.

4. Procédé selon l'une quelconque des revendications 1 à 3, **caractérisé en ce que** l'établissement, par le visiteur, d'une communication téléphonique vers un numéro précis conditionne son accès à la page de données.

5. Site accessible par un réseau de communication (9), **caractérisé en ce qu'**il comprend au moins une page incluant un son devant être émis à travers une communication téléphonique.

6. Site selon la revendication 5, **caractérisé en ce qu'**il comprend une page d'identification invitant un visiteur du site à composer un numéro de téléphone (2) sur une ligne téléphonique pour établir ladite communication téléphonique.

7. Site d'orientation téléphonique d'une entreprise ou d'une administration selon l'une quelconque des revendications 5 et 6, auquel un visiteur peut se connecter, via un réseau public de communication (9), pour joindre un interlocuteur ou un service en particulier, dans lequel le visiteur peut dérouler des menus correspondants aux différents départements de l'entreprise en naviguant sur le site et aboutir à une indication de l'interlocuteur qu'il cherchait, puis être mis en communication téléphonique avec lui en cliquant sur un lien, ce qui déclenche le transfert de la communication téléphonique sur le poste téléphonique de l'interlocuteur.

8. Site de mise en relation de visiteurs selon l'une quelconque des revendications 5 et 6, auquel différents visiteurs peuvent se connecter, via un réseau public de communication (9), afin d'entrer en relation, chacun formulant le problème qu'il souhaite résoudre en comptant sur la présence simultanée sur le site d'un autre visiteur susceptible de lui apporter une solution, tout visiteur pouvant consulter la liste des visiteurs connectés et les problèmes qu'ils soumettent, et un visiteur s'estimant en mesure d'aider un autre visiteur pouvant entrer directement en communication téléphonique avec lui par l'intermédiaire du site, en cliquant sur le lien correspondant.

9. Serveur vocal (12) apte à être relié, d'une part, au réseau téléphonique commuté (10), d'autre part à un réseau public de communication (9), **caractérisé en ce qu'**il comprend des moyens pour recevoir une requête via le réseau public de communication en provenance d'un autre serveur hébergeant une page de données, des moyens pour établir une communication téléphonique avec un visiteur de la page de données, et des moyens pour répondre à ladite requête en émettant des sons déterminés par ladite requête à travers ladite communication téléphonique.

10. Ordinateur (12) hébergeant un serveur vocal selon la revendication 9.

## Claims

1. A method of providing sound effects for a data page that can be consulted remotely via a communication network (9), the method being **characterized in that** it consists in setting up a telephone call with a user of the page and in using the telephone call to convey sounds to the user, with the transmission of said sounds being triggered by the user's navigation over the data page.

2. A method according to claim 1, **characterized in that** the telephone call set up with the user of the data page serves not only to convey sounds to the user, but also to receive sounds transmitted by the user.

3. A method according to claim 1 or claim 2, **characterized in that** the sounds transmitted by a first user on a first telephone call are directed to a second telephone call set up by a second user, and **in that** the sounds transmitted by the second user on the second telephone call are directed to the first telephone call.

4. A method according to any one of claims 1 to 3, **characterized in that** the user's access to the data page is conditioned by the user setting up a telephone call to a particular number.

5. A website accessible via a communication network (9), the website being **characterized in that** it comprises at least one page including sound to be sent over a telephone call.

6. A website according to claim 5, **characterized in that** it comprises an identification page inviting a user of the website to dial a telephone number (2) on a telephone line in order to set up said telephone call.

7. A telephone guidance website for a business or a public body according to claim 5 or claim 6, to which website a user can make a connection over a public communication network (9) in order to reach a particular service or third party, wherein the user can scroll through menus corresponding to various departments of the business by navigating over the website and can find an indication of the desired destination, and can then be put into telephone communication with that destination by clicking on a link, thereby causing the telephone call to be transferred to the destination telephone extension.

8. A website for putting users into touch with one another according to claim 5 or claim 6, various users being able to connect to the website via a public communication network (9) in order to get into touch, each user specifying a problem for which the user desires a solution in the hope that another user is simultaneously present on the website and capable of providing such a solution, all users being able to consult a list of connected users and the problems they are submitting, and any user of the opinion that he or she can provide assistance to another user being capable of entering directly into a telephone call with that user via the website, by clicking on the corresponding link.

9. A voice server (12) suitable for being connected firstly to the public switched telephone network (10) and secondly to a public computer network (9), the server being **characterized in that** it comprises means for receiving a request via the public computer network from another server hosting a data page, means for setting up a telephone call with a user of the data page, and means for responding to said request by transmitting sounds determined by said request over said telephone call.

10. A computer (12) hosting a voice server according to claim 9.

## Patentansprüche

1. Verfahren zur Vertonung einer Datenseite, die durch ein Kommunikationsnetz (9) fernabfragbar ist, **dadurch gekennzeichnet, dass** es darin besteht, eine Telefonverbindung mit einem Besucher der Seite herzustellen und dem Besucher über die Telefonverbindung Töne zu übermitteln, deren Übertragung durch die Navigation des Besuchers auf der Datenseite ausgelöst wird.

2. Verfahren nach Anspruch 1, **dadurch gekennzeichnet, dass** die Telefonverbindung, die mit dem Besucher der Datenseite hergestellt wird, nicht nur dazu dient, Töne zum Besucher zu übertragen, sondern auch dazu, Töne, die von ihm gesendet werden, zu erfassen.

3. Verfahren nach einem der Ansprüche 1 und 2, **dadurch gekennzeichnet, dass** die Töne, die von einem ersten Besucher auf einer ersten Telefonverbindung ausgesendet werden, zu einer zweiten Telefonverbindung, die von einem zweiten Besucher hergestellt wurde, gelenkt werden, und dass die Töne, die von dem zweiten Besucher auf der zweiten Telefonverbindung ausgesendet werden, zu der ersten Telefonverbindung gelenkt werden.

4. Verfahren nach einem der Ansprüche 1 bis 3, **dadurch gekennzeichnet, dass** die Herstellung einer Telefonverbindung durch den Besucher zu einer bestimmten Nummer seinen Zugriff auf die Datenseite bedingt.

5. Webseite, die über ein Kommunikationsnetz (9) zugänglich ist, **dadurch gekennzeichnet, dass** sie mindestens eine Seite, die einen Ton beinhaltet, der über eine Telefonverbindung gesendet werden soll, umfasst.

6. Webseite nach Anspruch 5, **dadurch gekennzeichnet, dass** sie eine Identifikationsseite umfasst, auf der ein Besucher der Webseite aufgefordert wird, eine Telefonnummer (2) auf einer Telefonleitung zu wählen, um die Telefonverbindung herzustellen.

7. Webseite zur telefonischen Orientierung über ein Unternehmen oder eine Verwaltung nach einem der Ansprüche 5 und 6, in die sich ein Besucher über ein öffentliches Kommunikationsnetz (9) einloggen kann, um insbesondere mit einem Gesprächspartner oder einer Stelle in Verbindung zu treten, auf der der Besucher Menüs, die den verschiedenen Abteilungen des Unternehmens entsprechen, durchblättern kann, indem er auf der Webseite navigiert und zu einer Angabe zu dem Gesprächspartner, den er suchte, gelangen kann, dann in Telefonverbindung mit diesem gesetzt werden kann, indem er einen Link anklickt, was die Übermittlung der Telefonverbindung auf den Telefonapparat des Gesprächspartners auslöst.

8. Webseite zur Herstellung einer Verbindung zwischen Besuchern nach einem der Ansprüche 5 und 6, bei der sich verschiedene Besucher über ein öffentliches Kommunikationsnetz (9) einloggen können, um in Verbindung zu treten, wobei jeder das Problem vorbringt, das er lösen möchte, wobei er die gleichzeitige Anwesenheit eines anderen Besuchers erwartet, der ihm eine Lösung bieten kann, wobei jeder Besucher die Liste der eingeloggten Besucher und die von ihnen vorbrachten Probleme einsehen kann, und wobei ein Besucher, der glaubt, einem anderen Besucher helfen zu können, über die Webseite direkt in Telefonverbindung mit diesem treten kann, indem er den entsprechenden Link anklickt.

9. Sprachserver (12), der geeignet ist, einerseits mit dem Fernsprechwählnetz (10), andererseits mit einem öffentlichen Kommunikationsnetz (9) verbunden zu werden, **dadurch gekennzeichnet, dass** er Mittel umfasst, um eine Anfrage über das öffentliche Kommunikationsnetz von einem anderen Server, der eine Datenseite aufweist, zu empfangen, Mittel, um eine Telefonverbindung mit einem Besucher der Datenseite herzustellen sowie Mittel, um auf die Anfrage zu antworten, indem über die Telefonverbindung Töne ausgesendet werden, die durch die Anfrage bestimmt sind.

10. Rechner (12), der einen Sprachserver nach Anspruch 9 aufweist.
